# EUROPEAN PATENT APPLICATION

(11) **EP 4 804 600 A1**
(43) Date of publication of application: **09.09.2026**
(21) Application number: 23957324.9
(22) Date of filing: 03.11.2023
(51) Int. Cl.: H04W 24/06

(54) **RESOURCE CONFIGURATION METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); JIN, Liqiang, Beijing 100022 (CN); ZHANG, Qun, Beijing 100022 (CN); LU, Yiwen, Beijing 100022 (CN); SUN, Gang, Beijing 100022 (CN)
(74) Representative: Haseltine Lake Kempner LLP
(86) International application number: PCT/CN2023/129594
(87) International publication number: WO 2025/091459

(57) **Abstract**

Embodiments of this disclosure provide a resource configuration method and apparatus. The resource configuration method includes: a terminal equipment receives configuration information from a network device, wherein the configuration information includes a second reference signal resource set for beam measurement and a first reference signal resource set for temporal beam prediction; and wherein a result of the beam measurement is input into an AI/ML functionality/model for temporal beam prediction.

## Description

### Technical Field

Embodiments of this disclosure relate to the field of communication technologies.

### Background

In NR Rel-18, artificial intelligence/machine learning (AI/ML) for an air interface is studied. The AI/ML may be available for the following use cases: channel state information (CSI) feedback enhancement, beam management, and positioning enhancement. The CSI feedback enhancement may include CSI prediction and CSI compression; the beam management may include spatial beam prediction and temporal beam prediction; and the positioning enhancement may include direct positioning and AI/ML-assisted positioning.

In some sub-use cases, a bilateral model may be used, that is, an AI/ML model is at a terminal equipment side and at a network device side. For example, the CSI compression may be used as a representative use case of the bilateral model. In other sub-use cases, a unilateral model may be used, that is, the AI/ML model is at the terminal equipment side or at the network device side.

It should be noted that the above introduction to the background is merely provided for clear and complete explanation of technical solutions of this disclosure and for easy understanding by those skilled in the art. And it should not be understood that these technical solutions are known to those skilled in the art only because they are described in the background of this disclosure.

### Summary

The inventors found that the terminal equipment and/or network device may use an AI/ML functionality/model to predict beams for future time instances according to beam measurement results, however, there is currently no definite solution on how to specifically configure beam measurement and/or beam prediction related to the AI/ML functionality/model.

In view of at least one of the above problems, embodiments of this disclosure provide a resource configuration method and apparatus.

According to one aspect of the embodiments of this disclosure, there is provided a resource configuration method, including:
receiving, by a terminal equipment, configuration information from a network device;
wherein the configuration information includes a second reference signal resource set for beam measurement and a first reference signal resource set for temporal beam prediction; and wherein a result of the beam measurement is input into an AI/ML functionality/model for temporal beam prediction.

According to another aspect of the embodiments of this disclosure, there is provided a resource configuration apparatus, including:
a receiving unit configured to receive configuration information from a network device;
wherein the configuration information includes a second reference signal resource set for beam measurement and a first reference signal resource set for temporal beam prediction; and wherein a result of the beam measurement is input into an AI/ML functionality/model for temporal beam prediction.

According to another aspect of the embodiments of this disclosure, there is provided a resource configuration method, including:
transmitting, by a network device, configuration information to a terminal equipment;
wherein the configuration information includes a second reference signal resource set for beam measurement and a first reference signal resource set for temporal beam prediction; and wherein a result of the beam measurement is input into an AI/ML functionality/model for temporal beam prediction.

According to another aspect of the embodiments of this disclosure, there is provided a resource configuration apparatus, including:
a transmitting unit configured to transmit configuration information to a terminal equipment;
wherein the configuration information includes a second reference signal resource set for beam measurement and a first reference signal resource set for temporal beam prediction; and wherein a result of the beam measurement is input into an AI/ML functionality/model for temporal beam prediction.

According to another aspect of the embodiments of this disclosure, there is provided a communication system, including:
a network device configured to transmit configuration information to a terminal equipment;
the terminal equipment configured to receive the configuration information, wherein the configuration information includes a second reference signal resource set for beam measurement and a first reference signal resource set for temporal beam prediction; and wherein a result of the beam measurement is input into an AI/ML functionality/model for temporal beam prediction.

One of advantageous effects of embodiments of this disclosure is that an AI/ML model is able to be used for temporal beam prediction based on a result of beam measurement, therefore accuracy and reliability of the AI/ML for the beam prediction are improved.

With reference to the following description and drawings, the particular embodiments of this disclosure are disclosed in detail, and the manners in which the principle of this disclosure can be used are indicated. It should be understood that the scope of the embodiments of this disclosure is not limited thereto. The embodiments of this disclosure contain a plurality of alternations, amendments and equivalents within the scope of the terms of the appended claims.

Features that are described and/or illustrated with respect to one embodiment may be used in a same way or in a similar way in one or more other embodiments, in combination with or instead of the features of the other embodiments.

It should be emphasized that the term "comprise/include" when used herein refers to the presence of features, integers, steps or components, but does not preclude the presence or addition of one or more other features, integers, steps or components.

### Brief Description of the Drawings

Elements and features depicted in one drawing or embodiment of this disclosure may be combined with elements and features depicted in one or more additional drawings or embodiments. Moreover, in the drawings, similar reference numerals designate corresponding parts throughout multiple drawings and may be used to designate like or similar parts in more than one embodiment.
FIG. 1 is a schematic diagram illustrating a communication system according to embodiments of this disclosure;
FIG. 2 is a schematic diagram illustrating a resource configuration method according to embodiments of this disclosure;
FIG. 3 is another schematic diagram illustrating a resource configuration method according to embodiments of this disclosure;
FIG. 4 is a schematic diagram illustrating reporting beam prediction results according to embodiments of this disclosure;
FIG. 5 is another schematic diagram illustrating reporting beam prediction results according to embodiments of this disclosure;
FIG. 6 is another schematic diagram illustrating reporting beam prediction results according to embodiments of this disclosure;
FIG. 7 is another schematic diagram illustrating reporting beam prediction results according to embodiments of this disclosure;
FIG. 8 is a schematic diagram illustrating beam refinement resources according to embodiments of this disclosure;
FIG. 9 is another schematic diagram illustrating a resource configuration method according to embodiments of this disclosure;
FIG. 10 is another schematic diagram illustrating a resource configuration method according to embodiments of this disclosure;
FIG. 11 is a schematic diagram illustrating a resource configuration apparatus according to embodiments of this disclosure;
FIG. 12 is another schematic diagram illustrating the resource configuration apparatus according to embodiments of this disclosure;
FIG. 13 is a schematic diagram illustrating a terminal equipment according to embodiments of this disclosure; and
FIG. 14 is a schematic diagram illustrating a network device according to embodiments of this disclosure.

### Detailed Description

The above and other features of this disclosure will be apparent with reference to the following description and drawings. In the description and drawings, particular embodiments of this disclosure have been disclosed in detail as being indicative of some of the embodiments in which the principles of this disclosure may be employed, however, it should be understood that this disclosure is not limited to the embodiments described herein. Rather, this disclosure includes all amendments, variants and equivalents falling within the scope of the appended claims.

In embodiments of this disclosure, terms "first", "second", etc. are used to differentiate different elements with respect to names, and do not indicate spatial arrangement or temporal orders of these elements, and these elements should not be limited by these terms. Terms "and/or" includes any one and all combinations of one or more relevantly listed terms. Terms "comprising", "including", "having" refer to presence of stated features, elements, components, or assemblies, but do not exclude presence or addition of one or more other features, elements, components, or assemblies.

In embodiments of this disclosure, singular forms "a", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to......", the term "based on" should be understood as "at least partially based on......", except clearly specified otherwise.

In embodiments of this disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G, New Radio (NR) and 6G in the future, etc., and/or other communication protocols that are currently known or will be developed in the future.

In embodiments of this disclosure, the term "network device", for example, refers to a device in a communication system that accesses a terminal equipment to a communication network and provides services for the terminal equipment. The network device may include but not limited to devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), an IAB host, etc. Furthermore, the base station may include a remote radio head (RRH), a remote radio unit (RRU), a relay, or a low-power node (such as a femto, and a pico, etc.). And the term "base station" may include some or all of its functions, and each base station may provide communication coverage for a specific geographic area. And a term "cell" may refer to a base station and/or its coverage area, depending on a context in which the term is used.

In embodiments of this disclosure, the term "user equipment" (UE) or "terminal equipment or terminal device" (TE) refers to, for example, equipment accessing to a communication network and receiving network services via a network device. The terminal equipment may be fixed or mobile, and may also be referred to as a mobile station (MS), a terminal, a subscriber station (SS), an access terminal (AT), a station, etc.

The terminal equipment may include but not limited to devices: a cellular phone, a personal digital assistant (PDA), a wireless modem, a wireless communication device, a handheld device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, the terminal equipment may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or include one or more network devices described above. The term "user side" or "terminal side" or "terminal equipment side" refers to a side of a user or a terminal, which may be a UE, or may include one or more terminal equipments described above. "A device" in this text may refer to a network device, and may also refer to a terminal equipment, except otherwise specified.

Scenarios of embodiments in this disclosure shall be described below by way of examples. However, this disclosure is not limited thereto.

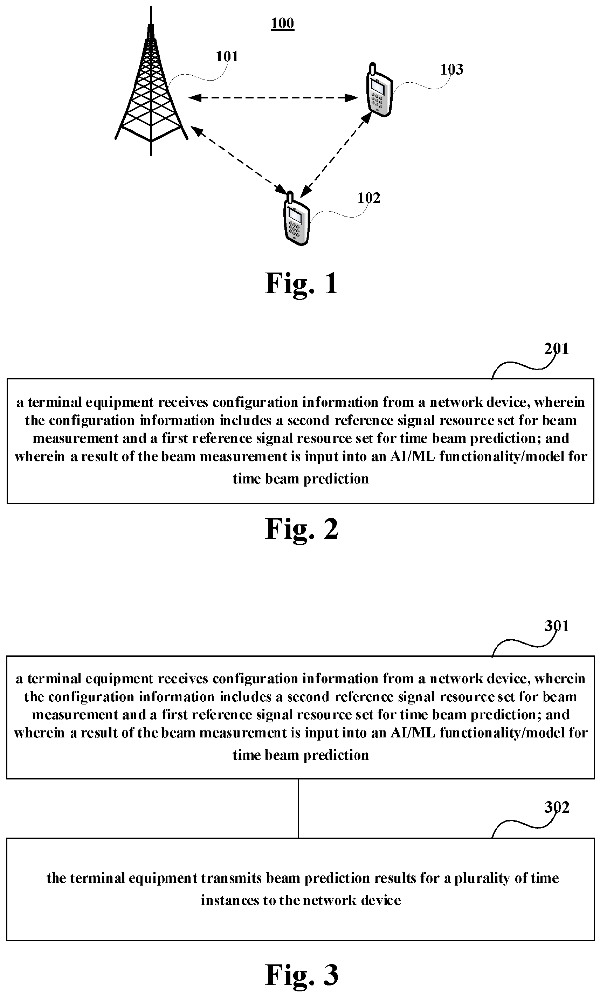

FIG. 1 is a schematic diagram illustrating a communication system according to embodiments of this disclosure, which schematically illustrates a situation in which a terminal equipment and a network device are used as an example. As illustrated in the FIG. 1, a communication system 100 may include a network device 101 and terminal equipments 102 and 103. For the sake of simplicity, the FIG. 1 only illustrates two terminal equipments and one network device as an example, however, the embodiments of this disclosure are not limited thereto.

In embodiments of this disclosure, existing services or services that may be implemented in the future may be transmitted between the network device 101 and the terminal equipments 102 and 103. For example, these services may include but are not limited to: an enhanced Mobile Broadband (eMBB), a massive Machine Type Communication (mMTC), and an Ultra-Reliable and Low Latency Communication (URLLC), etc.

It should be noted that the FIG. 1 illustrates that both the terminal equipments 102 and 103 fall within a coverage of the network device 101, however, this disclosure is not limited thereto. Both the terminal equipments 102 and 103 may not fall within the coverage of the network device 101, or one terminal equipment 102 falls within the coverage of the network device 101 and the other terminal equipment 103 falls out of the coverage of the network device 101.

In embodiments of this disclosure, higher layer signaling may be, for example, radio resource control (RRC) signaling; for example, an RRC message, including, for example, a MIB, system information, a dedicated RRC message; or an RRC IE (RRC information element). The higher layer signaling may also be, for example, MAC (Medium Access Control) signaling; or a MAC CE (MAC control element). However, this disclosure is not limited thereto.

In embodiments of this disclosure, one or more AI/ML models may be configured and run in a network device and/or a terminal equipment. The AI/ML model may be used for various signal processing functions of wireless communications, such as CSI prediction, CSI compression, beam prediction, positioning management, etc. This disclosure is not limited thereto.

### Embodiments of a First Aspect

Embodiments of this disclosure provide a resource configuration method described from a terminal equipment side.

FIG. 2 is a schematic diagram illustrating a resource configuration method according to embodiments of this disclosure. As illustrated in the FIG. 2, the method includes:
201: a terminal equipment receives configuration information from a network device, wherein the configuration information includes a second reference signal resource set for beam measurement and a first reference signal resource set for temporal beam prediction; and wherein a result of the beam measurement is input into an AI/ML functionality/model for temporal beam prediction.

It should be noted that the FIG. 2 only schematically illustrates the embodiments of this disclosure, however, this disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 2.

In some embodiments, functionality refers to an AI/ML feature/feature group enabled by a configuration, in which the configuration is supported based on conditions indicated by UE capabilities.

For example, the AL/ML functionality may be one or more functionalities, or may be one or more logical models, or may be one or more sub-functionalities, or may be one or more features, or may be one or more feature groups.

For another example, the functionality may involve use of the AI/ML for spatial beam prediction, or use of the AI/ML for temporal beam prediction, or use of the AI/ML for CSI prediction, or use of the AI/ML for direct positioning, or use of the AI/ML for assisted positioning, etc.

In some embodiments, the AI/ML model is located at a terminal equipment side.

FIG. 3 is another schematic diagram illustrating a resource configuration method according to embodiments of this disclosure. As illustrated in the FIG. 3, the method includes:
301: a terminal equipment receives configuration information from a network device, wherein the configuration information includes a second reference signal resource set for beam measurement and a first reference signal resource set for temporal beam prediction; and wherein a result of the beam measurement is input into an AI/ML functionality/model for temporal beam prediction; and
302: the terminal equipment transmits beam prediction results for a plurality of time instances to the network device.

For example, an AI/ML functionality is located at the terminal equipment side. After the AI/ML functionality is enabled or activated, the terminal equipment performs beam measurement according to a reference signal from a network side, uses the AI/ML for temporal beam prediction according to a result of the beam measurement, and transmits the beam prediction results for a plurality of time instances to the network device.

It should be noted that the FIG. 3 only schematically illustrates the embodiments of this disclosure, however, this disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 3.

In some embodiments, the prediction results for the plurality of time instances are reported in a plurality of beam reports, wherein one of the beam reports corresponds to a prediction result for one of the time instances, and the number of the plurality of time instances and/or a period of beam reporting is/are predefined or configured by the network device.

For example, the prediction results for the plurality of time instances are reported at the plurality of time instances, for example, beam reporting is performed at K time instances. Assuming that periodicity of CSI-RS transmission is T1, periodicity of beam reporting may be T2, where T2 <= T1 (or values of T1 and T2 are independent). The values of K and/or T2 may be predefined or configurable, and may also depend on UE capabilities. For each report, the predicted beam is for a current time instance. In this case, a traditional UCI format of beam reports may be reused. Reports of prediction results may be periodic/semi-persistent/aperiodic.

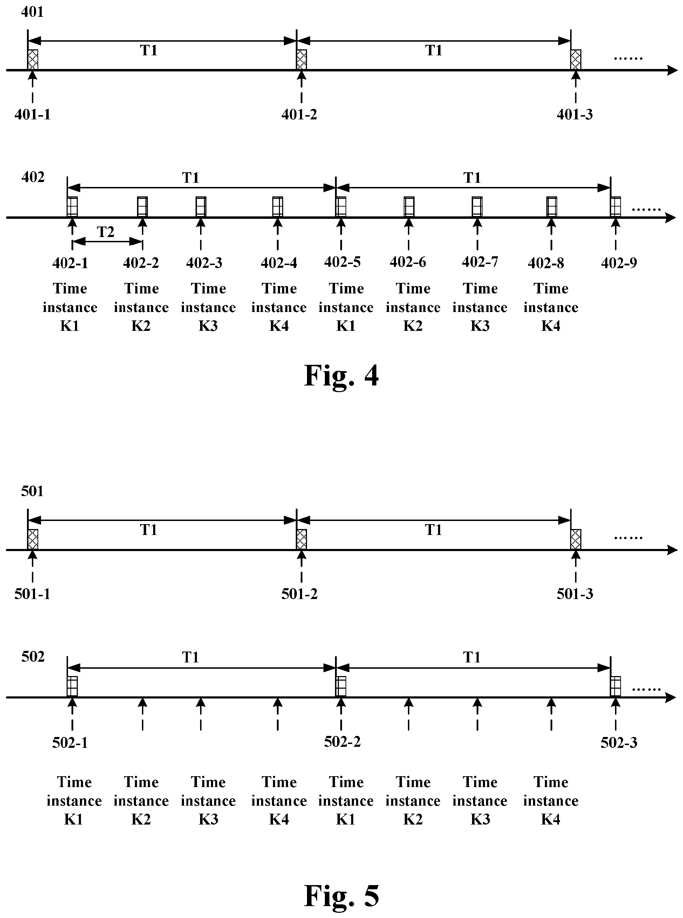

FIG. 4 is a schematic diagram illustrating reporting beam prediction results according to embodiments of this disclosure. As illustrated in the FIG. 4, a terminal equipment may periodically receive CSI-RSs and perform beam measurement and beam prediction, and is able to report beam prediction results for a plurality of time instances in a plurality of beam reports, in which one beam report corresponds to a prediction result for one time instance.

As illustrated in the FIG. 4, 401 indicates that CSI-RSs are transmitted on time domain resources, and 402 indicates reporting beam prediction results for a plurality of time instances. For example, assuming that the CSI-RSs use T1 as a transmission period, the CSI-RSs for beam measurement are respectively transmitted at 401-1, 401-2, 401-3, etc.

As illustrated in the FIG. 4, beam prediction results for current time instances K1, K2, K3, and K4 are reported at 402-1, 402-2, 402-3, and 402-4, respectively. For example, at the time instance K1, the UE reports prediction results for beams #3 and #5; at the time instance K2, the UE reports prediction results for beams #1 and #6; at the time instance K3, the UE reports prediction results for beams #2 and #7; and at the time instance K4, the UE reports prediction results for beams #3 and #4. In this case, an UCI format used for beam reports may be reused for reporting.

As illustrated in the FIG. 4, the beam reports use T2 as a period, and the beam prediction results are reported at 402-1, 402-2, 402-3, 402-4, 402-5, 402-6, 402-7, 402-8, 402-9, etc., where T2 is less than or equal to T1, or values of T1 and T2 are determined, independently. As illustrated in the FIG. 4, taking K = 4 as an example, the values of K and/or T2 in the embodiments may be predefined or may be configured by the network device according to the UE capabilities, which is not limited in this disclosure.

In some embodiments, the prediction results for the plurality of time instances are reported in one beam report, and the number of the plurality of time instances and/or an interval between two time instances is/are predefined or configured by the network device.

For example, prediction results for a plurality of time instances (such as K time instances) are reported in one beam report. The value of K and/or the interval between two time instances may be predefined or configurable, and may also depend on the UE capabilities. The reports of the prediction results may be periodic/semi-persistent/aperiodic.

FIG. 5 is another schematic diagram illustrating reporting beam prediction results according to embodiments of this disclosure. As illustrated in the FIG. 5, 501 indicates that CSI-RSs are transmitted on time domain resources, and 502 indicates reporting beam prediction results for a plurality of time instances. For example, assuming that the CSI-RSs use T1 as a transmission period, the CSI-RSs for beam measurement are respectively transmitted at 501-1, 501-2, 501-3, etc.

As illustrated in the FIG. 5, for example, the beam reports also use T1 as a period, and the beam prediction results are reported at 502-1, 502-2, 502-3, etc. Taking K = 4 as an example, each beam report corresponds to the prediction results for K time instances. For example, the beam prediction results for time instances K1 to K4 are reported in the beam report 502-1. In the embodiments, the K value may be predefined or configured by the network device according to the UE capabilities, which is not limited in this disclosure.

In some embodiments, one prediction result for one of the plurality of time instances is used as reference beam information, and a difference between the one prediction result and other prediction result is included in the beam report; wherein the difference-based means may be applied to all time instances, or the difference-based means may also be applied to one or more time instances.

For example, a L1-RSRP/L1-SINR difference may be reported. When a difference-based means is applied to all time instances, one prediction result for one time instance may be selected from the prediction results for all the time instances as reference beam information (e.g., a beam with a highest L1-RSRP/L1-SINR is selected as a reference beam), and a value of L1-RSRP/L1-SINR in beam prediction results for other time instances is compared with a value of L1-RSRP/L1-SINR for the reference beam and a difference is calculated. Thus, in one beam report, beams other than the reference beam only need to report a difference from the L1-RSRP/L1-SINR for the reference beam, so that the number of bits required for the beam reports is able to be reduced and signaling overhead is able to be saved.

In addition, the beam reports include relevant information indicating from which time instance of prediction result the reference beam is selected. For example, the beam reports may include an identifier for each time instance, so that each time instance corresponds to a plurality of predicted beams.

For another example, when a difference-based means is applied to one time instance, one prediction result is selected from a prediction result for one time instance as reference beam information (e.g., a beam with a highest L1-RSRP/L1-SINR is selected as a reference beam), and then a value of L1-RSRP/L1-SINR in other prediction result for this time instance is compared with a value of L1-RSRP/L1-SINR of the reference beam and a difference is calculated. Therefore, the reference beam information and a difference between other beam information and the reference beam information only need to be reported in a report of a beam prediction result for this time instance, so that the number of bits required for the beam reports is able to be reduced and signaling overhead is able to be saved.

In some embodiments, a prediction window of temporal beam prediction reporting may be defined, and the prediction window includes one or more time instances for beam prediction, wherein a length of the prediction window and/or the number of time instances within the prediction window or an interval between time instances may be predefined, or may be configured by the network device according to the UE capabilities. In addition, the prediction window may be periodic, semi-periodic or aperiodic.

For example, a period of the prediction window may be predefined, or may be configured by the network device according to the UE capabilities.

In some embodiments, the terminal equipment does not change a receiving beam for beam prediction within the prediction window. In other embodiments, the terminal equipment may also change a receiving beam for beam prediction within the prediction window.

In some embodiments, a measurement window for beam measurement may also be defined, and the measurement window includes one or more transmission occasions for reference signals for beam measurement.

For example, one measurement window may include a plurality of CSI-RS transmission occasions for beam measurement. A length of the measurement window and/or the number or an interval of reference signal transmission occasions within the prediction window may be predefined, or may be configured by the network device according to the UE capabilities, for example, the measurement window may be a fixed window, or the measurement window may also be a sliding window.

For another example, the measurement window may be periodic, semi-periodic or aperiodic. In some embodiments, a period of the measurement window may be predefined, or may be configured by the network device according to the UE capabilities.

In some embodiments, the terminal equipment does not change a receiving beam for beam measurement within the measurement window. In other embodiments, the terminal equipment may also change a receiving beam for beam measurement within the measurement window.

In some embodiments, the beam measurement is based on a reference signal group or burst; the reference signal group or burst forms one measurement window, and a length of the measurement window and/or the number or an interval of reference signal transmission occasions in the measurement window is/are predefined or configured by the network device.

For example, beam measurement is based on a reference signal group or burst. That is, one group of reference signals is able to form one measurement window. A length of the measurement window and/or the number or an interval of transmission occasions of the reference signals within the prediction window may be predefined, or may be configured by the network device according to the UE capabilities. In addition, a beam measurement window may also be periodic, semi-periodic or aperiodic, and a report window of a beam prediction result may also be periodic, semi-periodic or aperiodic, which is not limited in this disclosure.

In some embodiments, the prediction results for the plurality of time instances are reported in a plurality of beam reports, wherein one of the beam reports corresponds to a prediction result for one of the time instances, and the number of the plurality of time instances and/or a period of beam reporting is/are predefined or configured by the network device.

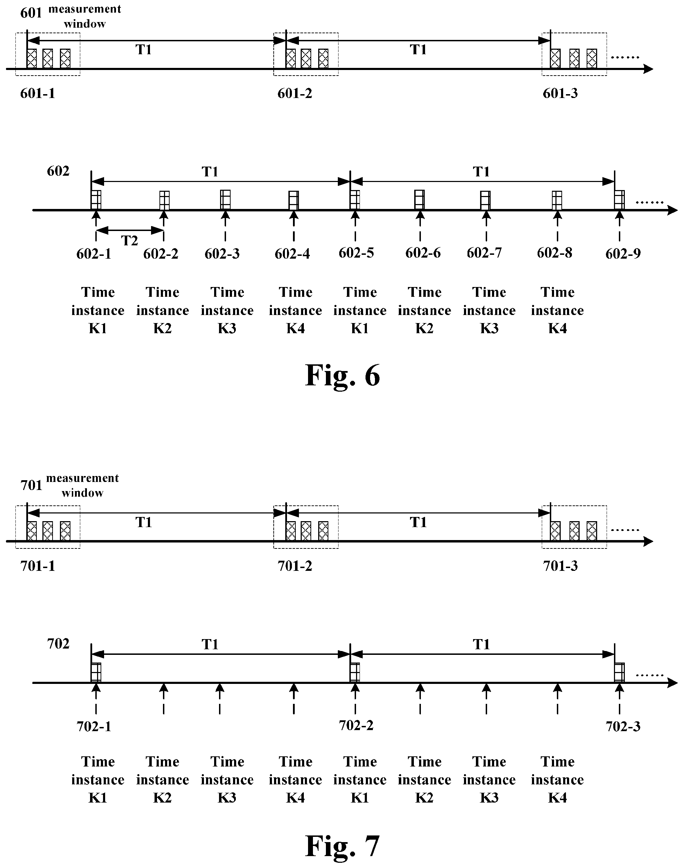

FIG. 6 is another schematic diagram illustrating reporting beam prediction results according to embodiments of this disclosure. As illustrated in the FIG. 6, 601 indicates that CSI-RSs are transmitted on time domain resources, and 602 indicates beam prediction results are reported for a plurality of time instances.

As illustrated in the FIG. 6, for example, each group of CSI-RS transmissions 601-1, 601-2, 601-3, etc. for beam measurement includes three CSI-RS transmission occasions. For example, a transmission period of CSI-RSs is T1. As illustrated in the FIG. 6, prediction results for a plurality of time instances may be reported in a plurality of beam prediction result reports. For example, one beam prediction result report shares a one-to-one correspondence with a prediction result for one time instance.

As illustrated in the FIG. 6, 1^{st} to 3^{rd} groups of CSI-RSs are transmitted with a period of T1, and beam prediction reports 602-1 to 602-9 are reported for beam prediction results with a period of T2. That is, the beam reports 602-1, 602-2, 602-3, and 602-4 correspond to beam prediction results for time instances K1, K2, K3, and K4, respectively. In the embodiments, the reporting period T2 and the K value may be predefined or configured by the network device according to the UE capabilities; the beam measurement window may be periodic, and the period T1 thereof may be predefined or configured by the network device according to the UE capabilities, which is not limited in this disclosure.

In some embodiments, the prediction results for the plurality of time instances are reported in one beam report, and the number of the plurality of time instances and/or an interval between two time instances is/are predefined or configured by the network device.

FIG. 7 is another schematic diagram illustrating reporting beam prediction results according to embodiments of this disclosure. As illustrated in the FIG. 7, 701 indicates that CSI-RSs are transmitted on time domain resources, and 702 indicates that beam prediction results are reported.

As illustrated in the FIG. 7, for example, each group of CSI-RS transmissions 701-1, 701-2, 701-3, etc. for beam measurement includes three CSI-RS transmission occasions. For example, a transmission period of CSI-RSs is T1. As illustrated in the FIG. 7, prediction results for a plurality of time instances may be reported in one beam prediction result report.

As illustrated in the FIG. 7, for example, a group of reference signals is transmitted on a time domain with a period of T1, and UE measures the signals and performs prediction, and also reports beam prediction results at 702 - 1, 702 - 2, 702 - 3, etc. with a period of T1.

As illustrated in the FIG. 7, taking K = 4 as an example, each beam report corresponds to prediction results for a plurality of time instances. For example, a beam report 702-1 includes beam prediction results for time instances K1 to K4 of a first group of CSI-RS transmissions (701-1). In the embodiments, the K value may be predefined or configured by the network device according to the UE capabilities, which is not limited in this disclosure.

In some embodiments, one prediction result for one of the plurality of time instances is used as reference beam information, and a difference between the one prediction result and other prediction result is included in the beam report; wherein the difference-based means may be applied to all time instances, or the difference-based means may also be applied to each one or more time instances.

For example, a L1-RSRP/L1-SINR difference is reported. For example, when a difference-based means is applied to all time instances, one prediction result for one time instance is selected from prediction results for a plurality of time instances as reference beam information (e.g., a beam with a highest L1-RSRP/L1-SINR is selected as a reference beam), and a value of L1-RSRP/L1-SINR in a beam prediction result for other time instance is compared with a value of L1-RSRP/L1-SINR of the reference beam and a difference is calculated. Thus, in one beam report, beams other than the reference beam only need to report a difference from the L1-RSRP/L1-SINR for the reference beam, so that the number of bits required for the beam reports is able to be reduced and signaling overhead can be saved.

In addition, the beam reports include relevant information indicating from which time instance of prediction result the reference beam is selected. For example, the beam reports may include an identifier for each time instance, so that each time instance corresponds to a plurality of predicted beams.

For another example, when a difference-based means is applied to one time instance, one prediction result is selected from a prediction result for one time instance as reference beam information (e.g., a beam with a highest L1-RSRP/L1-SINR is selected as a reference beam), and then a value of L1-RSRP/L1-SINR in other prediction result for this time instance is compared with a value of L1-RSRP/L1-SINR of the reference beam and a difference is calculated. Therefore, the reference beam information and a difference between other beam information and the reference beam information only need to be reported in a report of a beam prediction result for this time instance, so that the number of bits required for the beam reports is able to be reduced and signaling overhead is able to be saved.

In the embodiments, a prediction window of temporal beam prediction reporting may be defined, and the prediction window includes one or more time instances for beam prediction, wherein a length of the prediction window, and/or the number of time instances within the prediction window or an interval between time instances may be predefined, or may be configured by the network device according to the UE capabilities. In addition, the prediction window may be periodic, semi-periodic or aperiodic.

For example, a period of the prediction window may be predefined, or may be configured by the network device according to the UE capabilities. For another example, the prediction window does not overlap with the measurement window.

In some embodiments, the UE does not change a receiving beam for beam prediction within a prediction window. In another embodiment, the UE may also change a receiving beam for beam prediction within a prediction window.

In some embodiments, at least one reference signal in the reference signal group or burst within a measurement window is used for refinement of a receiving beam during the beam measurement.

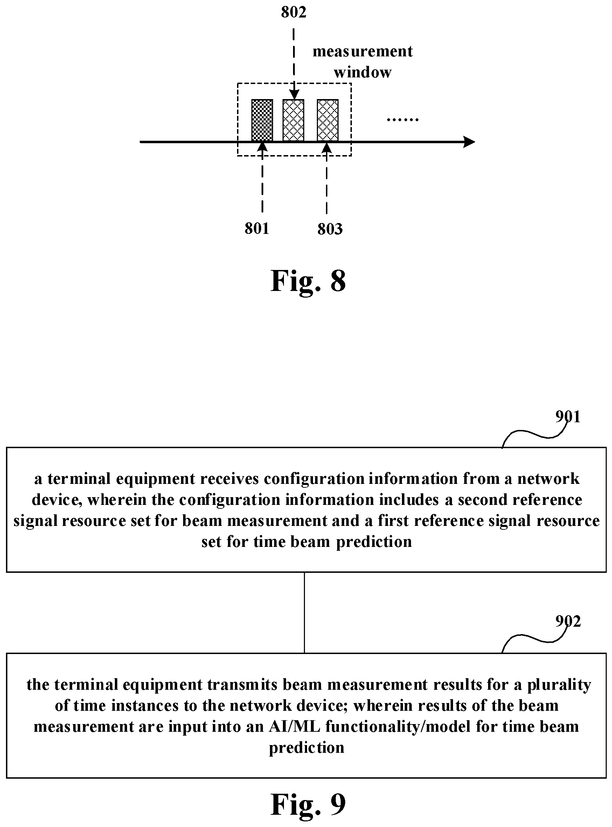

FIG. 8 is a schematic diagram illustrating beam refinement resources according to embodiments of this disclosure. For example, at least one reference signal in a reference signal group or burst is used for refinement of a receiving beam during beam measurement. For example, in the measurement window as illustrated in the FIG. 8, there exist 3 CSI-RSs marked as 801, 802, and 803, respectively. Beam refinement may be performed at the beginning of the measurement window, for example, CSI-RS 801 is used for beam refinement in the measurement window. This disclosure is not limited thereto, and the beam refinement may also be performed in the middle of the measurement window or at the end of the measurement window.

For example, the beam refinement is used to select a receiving beam of UE, in which CSI-RSs for beam refinement may reuse a legacy configuration, for example, a configuration parameter "repetition" of the CSI-RSs is set to "on", then remaining CSI-RSs may be used to use a measurement result as an input to an AI/ML model. For example, a terminal equipment may select a receiving beam with a good signal by using CSI-RS 801 for refinement, then use the receiving beam to measure CSI-RS 802 and CSI-RS 803.

In some embodiments, a group/burst of reference signals within a measurement window is determined based on one resource set, wherein reference signal resources located in a prediction window in the resource set are muted.

For example, one CSI-RS resource set includes a plurality of CSI-RS resources, and a muting pattern may be introduced to form a group or burst of reference signals based on the CSI-RS resource set. For example, reference signals are not transmitted during a prediction window, that is, the CSI-RSs are muted during the prediction window, so that a reference signal group or burst as illustrated in the FIG. 6 or the FIG. 7 may be formed. For another example, the muting pattern is configured and/or indicated by RRC signaling, MAC-CE or DCI. This disclosure is not limited thereto.

In some embodiments, a group or burst of reference signals is determined based on a plurality of resource sets, for example, CSI-RSs in at least two CSI-RS resource sets form a reference signal group or burst.

For example, three resource sets #1, #2 and #3 may be configured; the resource set #1 includes CSI-RS resources #0, CSI-RS #7, and CSI-RS resources #14, the resource set #2 includes CSI-RS resources #1, CSI-RS #8, and CSI-RS resources #15, and the resource set #3 includes CSI-RS resources #2, CSI-RS #9, and CSI-RS resources #16; then CSI-RS #0, CSI-RS #1, and CSI-RS #2 may form one reference signal group or burst, CSI-RS #7, CSI-RS #8, and CSI-RS #9 may form another reference signal group or burst, and CSI-RS #14, CSI-RS #15, and CSI-RS #16 may form yet another reference signal group or burst.

In some embodiments, the terminal equipment transmits to the network device a request used to change a configuration of the beam measurement and/or the temporal beam prediction.

For example, the request includes configuration information preferred by the terminal equipment. After receiving a transmitting request, the network device may change the configuration of the beam measurement and/or the temporal beam prediction for the terminal equipment according to the configuration information preferred by the terminal equipment.

For example, when a speed of the terminal equipment increases, the terminal equipment expects that an interval of CSI-RSs used for measurement is reduced, and/or the number of predicted time instances is reduced. In this case, the terminal equipment may include in the request an interval of CSI-RSs for measurement and/or the number of predicted time instances preferred by the terminal equipment.

In some embodiments, the configuration information preferred by the terminal equipment may be transmitted to a base station in a *UEAssistanceInformation* message. Alternatively, the configuration information preferred by the terminal equipment may be transmitted to a base station in a MAC-CE. This disclosure is not limited thereto. For example, other RRC messages may also be used.

The case where the AI/ML functionality/model is located in the terminal equipment is described above, and a case where the AI/ML functionality/model is located in the network device will be described below. Same contents as those of the above embodiments will not be described again.

FIG. 9 is another schematic diagram illustrating a resource configuration method according to embodiments of this disclosure. As illustrated in the FIG. 9, the method includes:
901: a terminal equipment receives configuration information from a network device, wherein the configuration information includes a second reference signal resource set for beam measurement and a first reference signal resource set for temporal beam prediction; and
902: the terminal equipment transmits beam measurement results for a plurality of time instances to the network device; wherein results of the beam measurement are input into an AI/ML functionality/model for temporal beam prediction.

For example, the AI/ML functionality is located at the network device side. The terminal equipment performs beam measurement based on the reference signal from the network side and transmits the beam measurement results to the network device. After the AI/ML functionality is enabled or activated, the network device uses the AI/ML to perform the temporal beam prediction based on the beam measurement results.

It should be noted that the FIG. 9 only schematically illustrates the embodiments of this disclosure, however, this disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 9.

For example, the measurement results for a plurality of past time instances (such as K time instances) may be reported in one beam report. The value of K and/or the interval between two time instances may be predefined or configurable, and may also depend on the UE capabilities.

For example, if the L1-RSRP/L1-SINR difference is applied to all time instances, the beam report indicates from which time instance a strongest beam (such as a beam with a highest L1-RSRP/L1-SINR) is selected as a reference beam for L1-RSRP/L1-SINR. Alternatively, an identifier for each time instance may be included in a report corresponding to a plurality of measurement beams. For another example, the L1-RSRP/L1-SINR difference is applied to one or more time instances, rather than to all time instances, within the measurement beam.

In some embodiments, the terminal equipment transmits to the network device a request used to change a configuration of the beam measurement and/or the temporal beam prediction. Alternatively, the request is only used to change a configuration of the beam measurement.

For example, the request includes configuration information preferred by the terminal equipment. After receiving a transmitting request, the network device may change the configuration of the beam measurement for the terminal equipment according to the configuration information preferred by the terminal equipment.

For example, when a speed of the terminal equipment increases, the terminal equipment expects that an interval of CSI-RSs used for measurement is reduced, and/or the number of predicted time instances is reduced. In this case, the terminal equipment may include in the request an interval of CSI-RSs for measurement and/or the number of predicted time instances preferred by the terminal equipment.

In some embodiments, the configuration information preferred by the terminal equipment may be transmitted to a base station in a *UEAssistanceInformation* message. Alternatively, the configuration information preferred by the terminal equipment may be transmitted to a base station in a MAC-CE. This disclosure is not limited thereto. For example, other RRC messages may also be used.

The above embodiments only illustrate the embodiments of this disclosure. However, this disclosure is not limited thereto, and appropriate variants may be made on the basis of the above embodiments. For example, the above embodiments may be used alone, or one or more of the above embodiments may be combined together.

As can be seen from the above embodiments, the embodiments of this disclosure use the AI/ML model for temporal beam prediction based on the results of beam measurement, thereby improving the accuracy and reliability of the AI/ML for the beam prediction.

### Embodiments of a Second Aspect

Embodiments of this disclosure provide a resource configuration method described from a network device side. The embodiments of the second aspect may be combined with the embodiments of the first aspect. Same contents as those of the embodiments of the first aspect will not be described again.

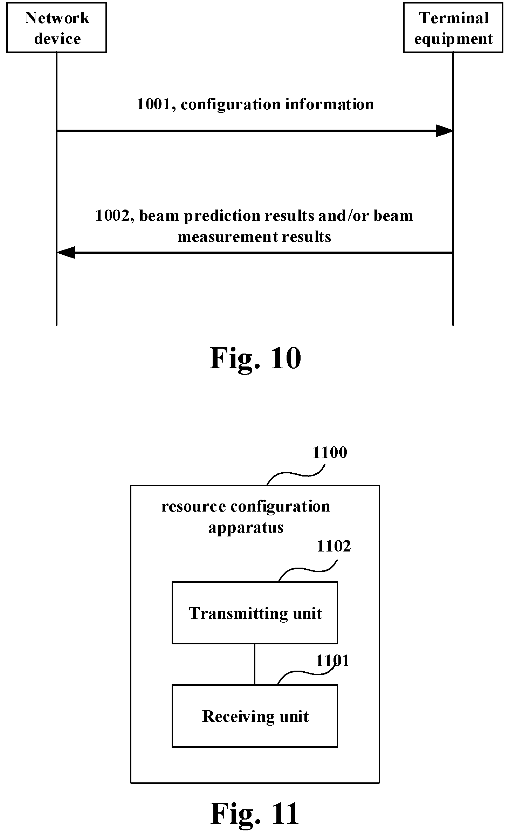

FIG. 10 is another schematic diagram illustrating a resource configuration method according to embodiments of this disclosure. As illustrated in the FIG. 10, the method includes:
1001: a network device transmits configuration information to a terminal equipment;
wherein the configuration information includes a second reference signal resource set for beam measurement and a first reference signal resource set for temporal beam prediction; and wherein a result of the beam measurement is input into an AI/ML functionality/model for temporal beam prediction.

As illustrated in the FIG. 10, the method may further include:
1002: the network device receives beam prediction results and/or beam measurement results for a plurality of time instances transmitted by the terminal equipment.

The above embodiments only illustrate the embodiments of this disclosure. However, this disclosure is not limited thereto, and appropriate variants may be made on the basis of the above embodiments. For example, the above embodiments may be used alone, or one or more of the above embodiments may be combined together.

As can be seen from the above embodiments, the embodiments of this disclosure use the AI/ML model for temporal beam prediction based on the results of beam measurement, thereby improving the accuracy and reliability of the AI/ML for the beam prediction.

### Embodiments of a Third Aspect

Embodiments of this disclosure provide a resource configuration apparatus, which may be, for example, a terminal equipment, or may be one or more components or assemblies configured in the terminal equipment. Same contents as those of the embodiments of the first and second aspects will not be described again.

FIG. 11 is another schematic diagram illustrating a resource configuration apparatus according to embodiments of this disclosure. As illustrated in the FIG. 11, a resource configuration apparatus 1100 according to embodiments of this disclosure includes:
a receiving unit 1101 configured to receive configuration information from a network device;
wherein the configuration information includes a second reference signal resource set for beam measurement and a first reference signal resource set for temporal beam prediction; and wherein a result of the beam measurement is input into an AI/ML functionality/model for temporal beam prediction.

In some embodiments, the AI/ML functionality/model is located in the terminal equipment. As illustrated in the FIG. 11, the resource configuration apparatus 1100 may also include:
a transmitting unit 1102 configured to transmit beam prediction results for a plurality of time instances to the network device.

In some embodiments, the prediction results for the plurality of time instances are reported in a plurality of beam reports, wherein one of the beam reports corresponds to a prediction result for one of the time instances, and the number of the plurality of time instances and/or a period of beam reporting is/are predefined or configured by the network device.

In some embodiments, the prediction results for the plurality of time instances are reported in one beam report, and the number of the plurality of time instances and/or an interval between two time instances is/are predefined or configured by the network device.

In some embodiments, one prediction result for one of the plurality of time instances is used as reference beam information, and a difference between the one prediction result and other prediction result is included in the beam report.

In some embodiments, the difference-based means is applied to all time instances.

In some embodiments, the difference-based means is applied to each one or more time instances.

In some embodiments, a prediction window of the temporal beam prediction is defined, the prediction window includes one or more time instances for beam prediction; a length of the prediction window and/or the number or an interval of time instances in the prediction window is/are predefined or configured by the network device.

In some embodiments, a receiving beam for beam prediction is not changed within the prediction window.

In some embodiments, a receiving beam for beam prediction is changed within the prediction window.

In some embodiments, a measurement window of the beam measurement is defined, and the measurement window includes one or more reference signal transmission occasions for beam measurement; a length of the measurement window and/or the number or an interval of reference signal transmission occasions in the measurement window is/are predefined or configured by the network device.

In some embodiments, a receiving beam for beam measurement is not changed within the measurement window.

In some embodiments, a receiving beam for beam measurement is changed within the measurement window.

In some embodiments, the beam measurement is based on a reference signal group or burst.

The reference signal group or burst forms one measurement window, and a length of the measurement window and/or the number or an interval of reference signal transmission occasions in the measurement window is/are predefined or configured by the network device.

In some embodiments, a receiving beam for beam measurement is not changed within the measurement window.

In some embodiments, a receiving beam for beam measurement is changed within the measurement window.

In some embodiments, the prediction results for the plurality of time instances are reported in one beam report, and the number of the plurality of time instances and/or an interval between two time instances is/are predefined or configured by the network device.

In some embodiments, one prediction result for one of the plurality of time instances is used as reference beam information, and a difference between the one prediction result and other prediction result is included in the beam report.

In some embodiments, the difference-based means is applied to all time instances.

In some embodiments, the difference-based means is applied to each one or more time instances.

In some embodiments, the prediction results for the plurality of time instances are reported in plurality of beam reports, wherein one of the beam reports corresponds to a prediction result for one of the time instances, and the number of the plurality of time instances and/or a period of beam reporting is/are predefined or configured by the network device.

In some embodiments, a prediction window of the temporal beam prediction is defined, the prediction window includes one or more time instances for beam prediction; a length of the prediction window and/or the number or an interval of time instances in the prediction window is/are predefined or configured by the network device.

In some embodiments, a receiving beam for beam prediction is not changed within the prediction window.

In some embodiments, a receiving beam for beam prediction is changed within the prediction window.

In some embodiments, at least one reference signal in the reference signal group or burst within the measurement window is used for refinement of a receiving beam during the beam measurement.

In some embodiments, the reference signal group or burst within the measurement window is determined based on one resource set, wherein reference signal resources located in a prediction window in the resource set are muted.

In some embodiments, the reference signal group or burst within the measurement window is determined based on a plurality of resource sets.

In some embodiments, the transmitting unit 1102 transmits to the network device a request used to change a configuration of the beam measurement and/or the temporal beam prediction.

In some embodiments, the request includes configuration information preferred by the terminal equipment.

In some embodiments, the AI/ML functionality/model is located in the network device.

In some embodiments, the transmitting unit 1102 transmits beam measurement results for a plurality of time instances to the network device.

In some embodiments, a result of the beam measurement is used by the network device to perform the temporal beam prediction; wherein the measurement results for the plurality of time instances are reported in one beam report, and the number of the plurality of time instances and/or an interval between two time instances is/are predefined or configured by the network device.

In some embodiments, the transmitting unit 1102 transmits to the network device a request used to change a configuration of the beam measurement and/or the temporal beam prediction.

In some embodiments, the request includes configuration information preferred by the terminal equipment.

The above embodiments only illustrate the embodiments of this disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The resource configuration apparatus 1100 may also include other components or modules. Refer to the related arts for the specific content of these components or modules.

In addition, for the sake of simplicity, the FIG. 11 only exemplifies a connection relationship or a signaling direction of components or modules, however, those skilled in the art should appreciate that the related arts such as bus connections can be adopted. The components or modules can be implemented by hardware facilities, such as a processor, a memory, a transmitter, and a receiver, which is not limited in this disclosure.

As can be seen from the above embodiments, the embodiments of this disclosure use the AI/ML model for temporal beam prediction based on the results of beam measurement, thereby improving the accuracy and reliability of the AI/ML for the beam prediction.

### Embodiments of a Fourth Aspect

Embodiments of this disclosure provide a resource configuration apparatus. The apparatus may be, for example, a network device, or may be one or more components or assemblies configured in the network device. Same contents as those of the embodiments of the first to third aspects will not be described again.

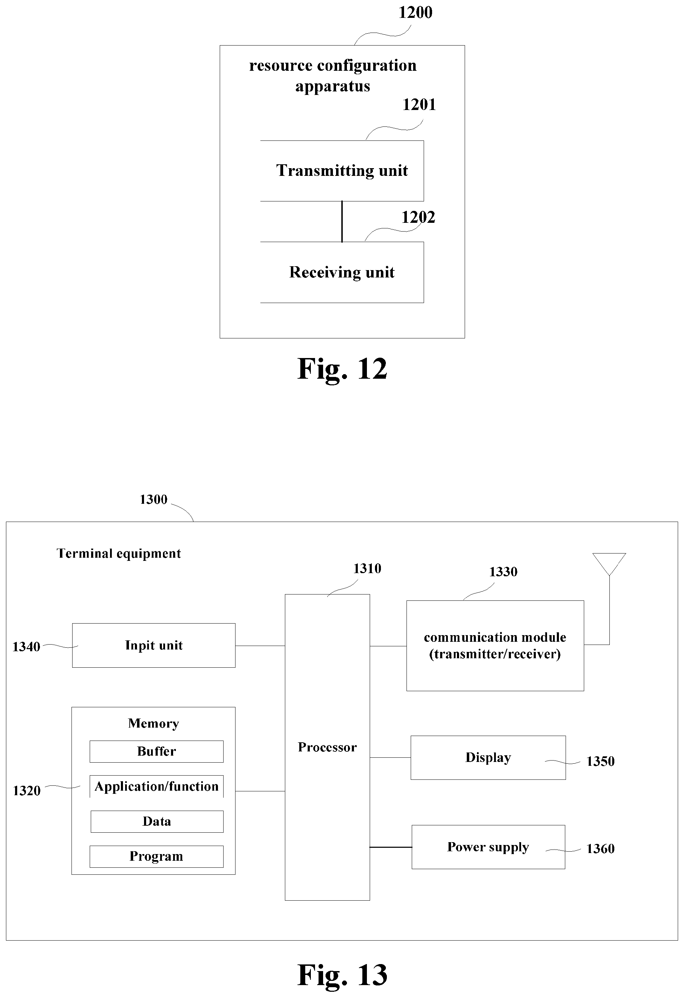

FIG. 12 is another schematic diagram illustrating the resource configuration apparatus according to embodiments of this disclosure. As illustrated in the FIG. 12, a resource configuration apparatus 1200 includes:
a transmitting unit 1201 configured to transmit configuration information to a terminal equipment;
wherein the configuration information includes a second reference signal resource set for beam measurement and a first reference signal resource set for temporal beam prediction; and wherein a result of the beam measurement is input into an AI/ML functionality/model for temporal beam prediction.

In some embodiments, as illustrated in the FIG. 12, the resource configuration apparatus 1200 may further include:
a receiving unit 1202 configured to receive beam prediction results for a plurality of time instances.

In some embodiments, the receiving unit 1202 may also receive a request transmitted by a terminal equipment, wherein the request is used to change a configuration of the beam measurement and/or the temporal beam prediction.

In some embodiments, the receiving unit 1202 may also receive beam measurement results for a plurality of time instances.

The above embodiments only illustrate the embodiments of this disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The resource configuration apparatus 1200 may also include other components or modules. Refer to the related arts for the specific content of these components or modules.

In addition, for the sake of simplicity, the FIG. 12 only exemplifies a connection relationship or a signaling direction of components or modules, however, those skilled in the art should appreciate that the related arts such as bus connections can be adopted. The components or modules can be implemented by hardware facilities, such as a processor, a memory, a transmitter, and a receiver, which is not limited in this disclosure.

As can be seen from the above embodiments, the embodiments of this disclosure use the AI/ML model for temporal beam prediction based on the results of beam measurement, thereby improving the accuracy and reliability of the AI/ML for the beam prediction.

### Embodiments of a Fifth Aspect

Embodiments of this disclosure also provide a communication system. Reference may be made to the FIG. 1. Same contents as those of the embodiments of the first to fourth aspects will not be described again.

In some embodiments, a communication system 100 may at least include:
a network device configured to transmit configuration information to a terminal equipment; and
the terminal equipment configured to receive configuration information from the network device;
wherein the configuration information includes a second reference signal resource set for beam measurement and a first reference signal resource set for temporal beam prediction; and wherein a result of the beam measurement is input into an AI/ML functionality/model for temporal beam prediction.

Embodiments of this disclosure also provide a terminal equipment, however, this disclosure is not limited thereto, and other devices may also be involved.

FIG. 13 is a schematic diagram illustrating a terminal equipment according to embodiments of this disclosure. As illustrated in the FIG. 13, a terminal equipment 1300 may include a processor 1310 and a memory 1320 that stores data and a program and is coupled to the processor 1310. It should be noted that the figure is exemplary; and other types of structures may also be used to supplement or replace this structure, in order to implement telecommunication functions or other functions.

For example, the processor 1310 may be configured to execute a program to implement the resource configuration method according to the embodiments of the first aspect. For example, the processor 1310 may be configured to receive configuration information from a network device; wherein the configuration information includes a second reference signal resource set for beam measurement and a first reference signal resource set for temporal beam prediction; and wherein a result of the beam measurement is input into an AI/ML functionality/model for temporal beam prediction.

As illustrated in the FIG. 13, the terminal equipment 1300 may further include: a communication module 1330, an input unit 1340, a display 1350, and a power supply 1360, wherein the functions of the above components are similar to those in the prior art and will not be described herein again. It should be noted that the terminal equipment 1300 does not necessarily include all the components illustrated in the FIG. 13, and the above components are not necessarily required. In addition, the terminal equipment 1300 may also include components not illustrated in the FIG. 13. Please refer to the prior art.

Embodiments of this disclosure further provide a network device, which may be, for example, a base station, however, this disclosure is not limited thereto, and other network devices may also be involved.

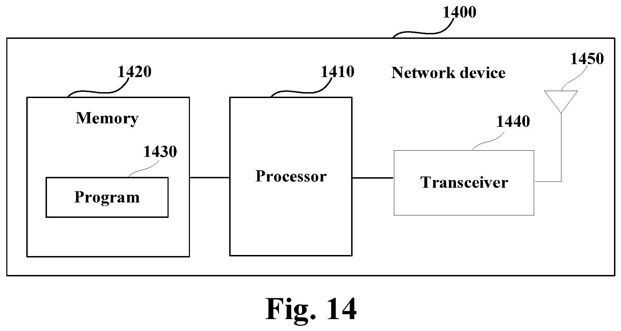

FIG. 14 is a schematic diagram illustrating a composition of a network device according to embodiments of this disclosure. As illustrated in the FIG. 14, a network device 1400 may include: a processor 1410 (such as a central processing unit (CPU)) and a memory 1420 coupled to the processor 1410. The memory 1420 may store various data. In addition, the memory 1420 may store a program 1430 for information processing, and the program 1430 may be executed under the control of the processor 1410.

For example, the processor 1410 may be configured to execute a program to implement the resource configuration method according to the embodiments of the second aspect. For example, the processor 1410 may be configured to transmit configuration information to a terminal equipment; wherein the configuration information includes a second reference signal resource set for beam measurement and a first reference signal resource set for temporal beam prediction; and wherein a result of the beam measurement is input into an AI/ML functionality/model for temporal beam prediction.

In addition, as illustrated in the FIG. 14, the network device 1400 may further include: a transceiver 1440 and an antenna 1450, wherein the functions of the above components are similar to those in the prior art and will not be described herein again. It should be noted that the network device 1400 does not necessarily include all the components illustrated in the FIG. 14. In addition, the network device 1400 may also include components not illustrated in the FIG. 14. Please refer to the prior art.

Embodiments of this disclosure also provide a computer program, wherein when the program is executed in a terminal equipment, the program enables the terminal equipment to perform the resource configuration method according to the embodiments of the first aspect.

Embodiments of this disclosure also provide a storage medium storing a computer program, wherein the computer program enables a terminal equipment to perform the resource configuration method according to the embodiments of the first aspect.

Embodiments of this disclosure also provide a computer program, wherein when the program is executed in a network device, the program enables the network device to perform the resource configuration method according to the embodiments of the second aspect.

Embodiments of this disclosure also provide a storage medium storing a computer program, wherein the computer program enables a network device to perform the resource configuration method according to the embodiments of the second aspect.

The above apparatus and method of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a magnetic disk, a CD, a DVD, a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. These software modules may respectively correspond to the steps shown in the drawings. And these hardware modules, for example, may be carried out by firming these software modules by using a field programmable gate array (FPGA).

The software modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information to the memory medium; or the memory medium may be a component of the processor. The processor and the memory medium may be located in an ASIC. The software modules may be stored in a memory of a mobile terminal and may also be stored in a memory card of a pluggable mobile terminal. For example, if equipment (such as a mobile terminal) employs an MEGA-SIM card of a relatively large capacity or a flash memory device of a large capacity, the software modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and amendments to this disclosure may be made by those skilled in the art according to the principle of this disclosure, and such variants and amendments also fall within the scope of this disclosure.

As to implementations containing the above embodiments, supplements are further disclosed below:
1. A resource configuration method, including:
   receiving, by a terminal equipment, configuration information from a network device;
   wherein the configuration information includes a second reference signal resource set for beam measurement and a first reference signal resource set for temporal beam prediction; and wherein a result of the beam measurement is input into an AI/ML functionality/model for temporal beam prediction.
2. A resource configuration method, including:
   transmitting, by a network device, configuration information to a terminal equipment;
   wherein the configuration information includes a second reference signal resource set for beam measurement and a first reference signal resource set for temporal beam prediction; and wherein a result of the beam measurement is input into an AI/ML functionality/model for temporal beam prediction.
3. A terminal equipment, including: a memory configured to store a computer program and a processor configured to execute the computer program to implement the resource configuration method according to supplement 1.
4. A network device, including: a memory configured to store a computer program and a processor configured to execute the computer program to implement the resource configuration method according to supplement 2.

## Claims

1. A resource configuration apparatus, comprising:
a receiving unit configured to receive configuration information from a network device;
wherein the configuration information comprises a second reference signal resource set for beam measurement and a first reference signal resource set for temporal beam prediction; and wherein a result of the beam measurement is input into an AI/ML functionality/model for temporal beam prediction.

2. The apparatus according to claim 1, wherein the AI/ML functionality/model is located in a terminal equipment, and the apparatus further comprises:
a transmitting unit configured to transmit one or more beam prediction results for a plurality of time instances to the network device.

3. The apparatus according to claim 2, wherein the prediction results for the plurality of time instances are reported in a plurality of beam reports, wherein one of the beam reports corresponds to a prediction result for one of the time instances, and the number of the plurality of time instances and/or a period of beam reporting is/are predefined or configured by the network device.

4. The apparatus according to claim 2, wherein the prediction results for the plurality of time instances are reported in one beam report, and the number of the plurality of time instances and/or an interval between two time instances is/are predefined or configured by the network device;
one prediction result for one of the plurality of time instances is used as reference beam information, and a difference between the one prediction result and other prediction result is included in the beam report; wherein a difference-based means is applied to all time instances, or a difference-based means is applied to one or more time instances.

5. The apparatus according to claim 2, wherein a prediction window of the temporal beam prediction is defined, the prediction window comprises one or more time instances for beam prediction; a length of the prediction window and/or the number or an interval of time instances in the prediction window is/are predefined or configured by the network device.

6. The apparatus according to claim 5, wherein a receiving beam for beam prediction is not changed within the prediction window; or a receiving beam for beam prediction is changed within the prediction window.

7. The apparatus according to claim 2, wherein a measurement window of the beam measurement is defined, the measurement window comprises one or more reference signal transmission occasions for beam measurement; a length of the measurement window and/or the number or an interval of reference signal transmission occasions in the measurement window is/are predefined or configured by the network device.

8. The apparatus according to claim 7, wherein a receiving beam for beam measurement is not changed within the measurement window; or a receiving beam for beam measurement is changed within the measurement window.

9. The apparatus according to claim 2, wherein the beam measurement is based on a reference signal group or burst;
the reference signal group or burst forms one measurement window, and a length of the measurement window and/or the number or an interval of reference signal transmission occasions in the measurement window is/are predefined or configured by the network device;
a receiving beam for beam measurement is not changed within the measurement window; or a receiving beam for beam measurement is changed within the measurement window.

10. The apparatus according to claim 9, wherein the prediction results for the plurality of time instances are reported in one beam report, and the number of the plurality of time instances and/or an interval between two time instances is/are predefined or configured by the network device;
one prediction result for one of the plurality of time instances is used as reference beam information, and a difference between the one prediction result and other prediction result is included in the beam report; wherein a difference-based means is applied to all time instances, or a difference-based means is applied to one or more time instances.

11. The apparatus according to claim 9, wherein the prediction results for the plurality of time instances are reported in a plurality of beam reports, wherein one of the beam reports corresponds to a prediction result for one of the time instances, and the number of the plurality of time instances and/or a period of beam reporting is/are predefined or configured by the network device.

12. The apparatus according to claim 9, wherein a prediction window of the temporal beam prediction is defined, the prediction window comprises one or more time instances for beam prediction; a length of the prediction window and/or the number or an interval of time instances in the prediction window is/are predefined or configured by the network device; and
wherein a receiving beam for beam prediction is not changed within the prediction window; or a receiving beam for beam prediction is changed within the prediction window.

13. The apparatus according to claim 9, wherein at least one reference signal in the reference signal group or burst within the measurement window is used for refinement of a receiving beam during the beam measurement.

14. The apparatus according to claim 9, wherein the reference signal group or burst is determined according to one resource set within the measurement window, wherein reference signal resources located in a prediction window in the resource set are muted;
or the reference signal group or burst within the measurement window is determined according to a plurality of resource sets.

15. The apparatus according to claim 2, wherein the transmitting unit is configured to transmit to the network device a request used to change a configuration of the beam measurement and/or the temporal beam prediction; the request comprising configuration information preferred by the terminal equipment.

16. The apparatus according to claim 1, wherein the AI/ML functionality/model is located in the network device, and the apparatus further comprises:
a transmitting unit configured to transmit one or more beam measurement results for a plurality of time instances to the network device.

17. The apparatus according to claim 16, wherein the beam measurement results are used by the network device to perform the temporal beam prediction; and wherein the measurement results for the plurality of time instances are included in one beam report, and the number of the plurality of time instances and/or an interval between two time instances is/are predefined or configured by the network device.

18. The apparatus according to claim 16, wherein the transmitting unit is configured to transmit to the network device a request used to change a configuration of the beam measurement and/or the temporal beam prediction; the request comprising configuration information preferred by a terminal equipment.

19. A resource configuration apparatus, comprising:
a transmitting unit configured to transmit configuration information to a terminal equipment;
wherein the configuration information comprises a second reference signal resource set for beam measurement and a first reference signal resource set for temporal beam prediction; and wherein a result of the beam measurement is input into an AI/ML functionality/model for temporal beam prediction.

20. A communication system, comprising:
a network device configured to transmit configuration information to a terminal equipment; and
the terminal equipment configured to receive the configuration information; wherein the configuration information comprises a second reference signal resource set for beam measurement and a first reference signal resource set for temporal beam prediction; and wherein a result of the beam measurement is input into an AI/ML functionality/model for temporal beam prediction.
